# EUROPEAN PATENT APPLICATION

(11) **EP 1 837 776 A1**
(43) Date of publication of application: **26.09.2007**
(21) Application number: 05806135.9
(22) Date of filing: 14.11.2005
(51) Int. Cl.: G06F 17/21

(54) **DOCUMENT PROCESSING DEVICE AND DOCUMENT PROCESSING METHOD**

(30) Priority: 12.11.2004 JP 2004329806
(71) Applicant: JustSystems Corporation, Tokushima-shi, Tokushima 771-0189 (JP)
(72) Inventor: TSUJII, Masaki c/o JUSTSYSTEMS CORPORATION, Tokushima-shi Tokushima 7710189 (JP)
(74) Representative: Palmer, Jonathan R.
(86) International application number: PCT/JP2005/020901
(87) International publication number: WO 2006/051974

(57) **Abstract**

The present invention provides a technique for enabling appropriate processing of a document described in a markup language.

Upon acquiring a document described in a markup language, a document processing apparatus extracts an element provided for annotation in the document. When there is an element provided for annotation, the name of the element is displayed adjacent to the position where the value of the element is displayed. The name of the element may be displayed in text form or in a balloon. Also, the name of the element may be displayed in a status display area, etc.

## Description

### [Technical Field]

The present invention relates to a document processing technique, particularly to a data processing apparatus for processing a document described in a markup language.

### [Background Art]

XML has been attracting attention as a form suitable for sharing data with other people via a network or the like, and applications for creating, displaying and editing XML documents have been developed accordingly (see Patent document 1, for example). An XML document is created based upon a vocabulary (tag set) defined according to a document type definition, etc.
[Patent Document 1]
Japanese Patent Application Laid-open No. 2001-290804

### [Disclosure of Invention]

### [Problem to be Solved by the Invention]

The XML technique allows the user to define vocabularies as desired. In theory, this allows a limitless number of vocabularies to be created. It is not practical, however, to provide dedicated viewer/editor environments for all of such vocabularies. Conventionally, when editing a document described in a vocabulary for which no dedicated editing environment is provided, the user has directly edited the text-based source file of the document with a text editor or the like.

The present invention has been made in view of such a situation, and a general purpose thereof is to provide a technique for processing data structured by a markup language with improved ease-of-use for users.

### [Means for Solving the Problem]

One aspect of the present invention relates to a document processing apparatus. The document processing apparatus comprises: acquiring means for acquiring a document described in a markup language; extracting means for extracting an element or an attribute contained in the document; and displaying means for displaying the name of the element or attribute thus extracted.

The extracting means may extract an element or an attribute provided for annotation in the document. The name may be displayed in text form adjacent to any one of the value of the element, the value of the attribute, and the value of the element to which the attribute belongs. Alternatively, the name may be displayed in a balloon adjacent to any one of the value of the element, the value of the attribute, and the value of the element to which the attribute belongs. Also, the name may be displayed in a status display area.

Another aspect of the present invention is also a document processing apparatus.
The apparatus comprises: a document acquisition unit for acquiring a structured document file described in a markup language as a source file; a definition file acquisition unit for acquiring a definition file which contains a method of displaying data included in a source file; and a data display unit for displaying data included in a source file on the screen by performing the logic described in the definition file.
The definition file contains annotation information for specifying related information, which represents characteristics of an element and which is related to a tag, to be displayed as an annotation, from among related information included in a source file. The data display unit then displays the related information, specified by the annotation information in the definition file, as an annotation to the body of the source file.

Yet another aspect of the present invention is also a document processing apparatus.
The apparatus comprises: a document acquisition unit for acquiring a structured document file described in a markup language as a source file; and a data display unit for displaying data included in a source file on the screen in a predetermined display format.
In the source file, an annotator is attached to related information to be displayed as an annotation, among related information representing characteristics of an element and related to a tag. The data display unit then displays the related information, specified by the annotator, as an annotation to the body of the source file.

The document processing apparatus may further comprise an operation detection unit for detecting user operation provided to data displayed on the screen. When an element, defined as an object to be displayed as an annotation, is specified by user operation, the data display unit may display related information on the element as an annotation.

The data display unit may display related information of at least any one of the tag name of a target element, the value of the target element, the attribute name of the target element, and the value of the attribute of the target element, as an annotation.

Still yet another aspect of the present invention is a document processing method.
The method comprises: acquiring a structured document file described in a markup language as a source file; acquiring a definition file which contains a method of displaying data included in a source file; and displaying data included in a source file on the screen by performing the logic described in the definition file.
The definition file contains annotation information for specifying related information, which represents characteristics of an element and which is related to a tag, to be displayed as an annotation, from among related information included in a source file. The displaying data on the screen comprises displaying the related information, specified by the annotation information in the definition file, as an annotation to the body of the source file.

A further aspect of the present invention is also a document processing method.
The method comprises: acquiring a structured document file described in a markup language as a source file; and displaying data included in a source file on the screen in a predetermined display format.
In the source file, an annotator is attached to related information to be displayed as an annotation, among related information representing characteristics of an element and related to a tag. The displaying data on the screen comprises displaying the related information, specified by the annotator, as an annotation to the body of the source file.

Optional combinations of the aforementioned constituting elements, and implementations of the invention in the form of methods, apparatuses, systems may also be practiced as additional modes of the present invention.

### [Advantages]

The present invention improves users' convenience in processing data structured by a markup language.

### [Brief Description of the Drawings]

FIG. 1 is a diagram which shows a configuration of a document processing apparatus according to the background technique.
FIG. 2 is a diagram which shows an example of an XML document to be edited by the document processing apparatus.
FIG. 3 is a diagram which shows an example in which the XML document shown in FIG. 2 is mapped to a table described in HTML.
FIG. 4(a) is a diagram which shows an example of a definition file used for mapping the XML document shown in FIG. 2 to the table shown in FIG. 3.
FIG. 4(b) is a diagram which shows an example of a definition file used for mapping the XML document shown in FIG. 2 to the table shown in FIG. 3.
FIG. 5 is a diagram which shows an example of a screen on which the XML document shown in FIG. 2 is displayed after having been mapped to HTML according to the correspondence shown in FIG. 3.
FIG. 6 is a diagram which shows an example of a graphical user interface provided by a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document to be edited by the document processing apparatus.
FIG. 10 is a diagram which shows an example of a screen on which the document shown in FIG. 9 is displayed.
FIG. 11 is a diagram which shows a part of an XML document containing an annotation.
FIG. 12 is a diagram which shows an example of a screen on which the XML document shown in FIG. 11 is displayed.
FIG. 13 is a diagram which shows another example of a screen on which the XML document shown in FIG. 11 is displayed.
FIG. 14 is a diagram which shows yet another example of a screen on which the XML document shown in FIG. 11 is displayed.
FIG. 15 is a diagram which shows a configuration of a document processing apparatus according to an embodiment.

### [Explanation of Reference Numerals]

- 20: document processing apparatus
- 22: main control unit
- 24: editing unit
- 30: DOM unit
- 32: DOM provider
- 34: DOM builder
- 36: DOM writer
- 40: CSS unit
- 42: parser
- 44: CSS provider
- 46: rendering unit
- 50: HTML unit
- 52, 62: control unit
- 54, 64: editing unit
- 56, 66: display unit
- 60: SVG unit
- 70: data acquisition unit
- 72: document acquisition unit
- 74: definition file acquisition unit
- 80: VC unit
- 82: mapping unit
- 84: definition file acquisition unit
- 86: definition file creating unit
- 100: document processing apparatus

### [Best Mode for Carrying Out the Invention]

### (Background technique)

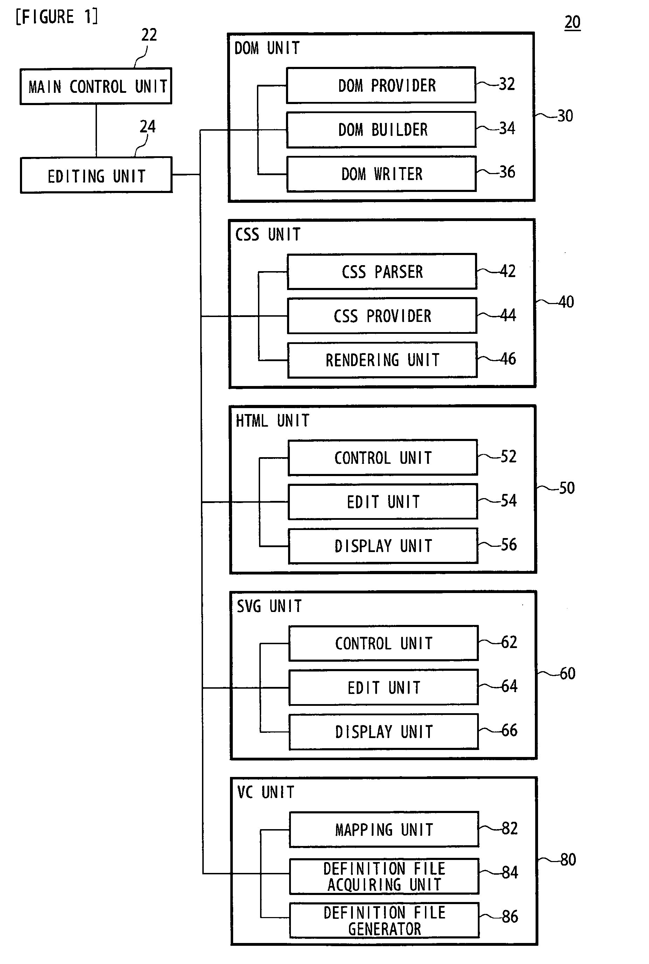

FIG. 1 illustrates a structure of a document processing apparatus 20 according to the background technique. The document processing apparatus 20 processes a structured document where data in the document are classified into a plurality of components having a hierarchical structure. Represented in the background technique is an example in which an XML document, as one type of a structured document, is processed. The document processing apparatus 20 is comprised of a main control unit 22, an editing unit 24, a DOM unit 30, a CSS unit 40, an HTML unit 50, an SVG unit 60 and a VC unit 80 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 22 provides for the loading of a plug-in or a framework for executing a command. The editing unit 24 provides a framework for editing XML documents. Display and editing functions for a document in the document processing apparatus 20 are realized by plug-ins, and the necessary plug-ins are loaded by the main control unit 22 or the editing unit 24 according to the type of document under consideration. The main control unit 22 or the editing unit 24 determines which vocabulary or vocabularies describes the content of an XML document to be processed, by referring to a name space of the document to be processed, and loads a plug-in for display or editing corresponding to the thus determined vocabulary so as to execute the display or the editing. For instance, an HTML unit 50, which displays and edits HTML documents, and an SVG unit 60, which displays and edits SVG documents, are implemented in the document processing apparatus 20. That is, a display system and an editing system are implemented as plug-ins for each vocabulary (tag set), so that when an HTML document and an SVG document are edited, the HTML unit 50 and the SVG unit 60 are loaded, respectively. As will be described later, when compound documents, which contain both the HTML and SVG components, are to be processed, both the HTML unit 50 and the SVG unit 60 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 24 receives an event, which is an editing instruction, from the user via the user interface. Upon reception of such an event, the editing unit 24 notifies a suitable plug-in or the like of this event, and controls the processing such as redoing this event, canceling (undoing) this event, etc.

The DOM unit 30 includes a DOM provider 32, a DOM builder 34 and a DOM writer 36. The DOM unit 30 realizes functions in compliance with a document object model (DOM), which is defined to provide an access method used for handling data in the form of an XML document. The DOM provider 32 is an implementation of a DOM that satisfies an interface defined by the editing unit 24. The DOM builder 34 generates DOM trees from XML documents. As will be described later, when an XML document to be processed is mapped to another vocabulary by the VC unit 80, a source tree, which corresponds to the XML document in a mapping source, and a destination tree, which corresponds to the XML document in a mapping destination, are generated. At the end of editing, for example, the DOM writer 36 outputs a DOM tree as an XML document.

The CSS unit 40, which provides a display function conforming to CSS, includes a CSS parser 42, a CSS provider 44 and a rendering unit 46. The CSS parser 42 has a parsing function for analyzing the CSS syntax. The CSS provider 44 is an implementation of a CSS object and performs CSS cascade processing on the DOM tree. The rendering unit 46 is a CSS rendering engine and is used to display documents, described in a vocabulary such as HTML, which are laid out using CSS.

The HTML unit 50 displays or edits documents described in HTML. The SVG unit 60 displays or edits documents described in SVG. These display/editing systems are realized in the form of plug-ins, and each system is comprised of a display unit (also designated herein as a "canvas") 56 and 66, which displays documents, a control unit (also designated herein as an "editlet") 52 and 62, which transmits and receives events containing editing commands, and an edit unit (also designated herein as a "zone") 54 and 64, which edits the DOM according to the editing commands. Upon the control unit 52 or 62 receiving a DOM tree editing command from an external source, the edit unit 54 or 64 modifies the DOM tree and the display unit 56 or 66 updates the display. These units have a structure similar to the framework of the so-called MVC (Model-View-Controller). With such a structure, in general, the display units 56 and 66 correspond to "View". On the other hand, the control units 52 and 62 correspond to "Controller", and the edit units 54 and 64 and DOM instance corresponds to "Model". The document processing apparatus 20 according to the background technique allows an XML document to be edited according to each given vocabulary, as well as providing a function of editing the HTML document in the form of tree display. The HTML unit 50 provides a user interface for editing an HTML document in a manner similar to a word processor, for example. On the other hand, the SVG unit 60 provides a user interface for editing an SVG document in a manner similar to an image drawing tool.

The VC unit 80 includes a mapping unit 82, a definition file acquiring unit 84 and a definition file generator 86. The VC unit 80 performs mapping of a document, which has been described in a particular vocabulary, to another given vocabulary, thereby providing a framework that allows a document to be displayed and edited by a display/editing plug-in corresponding to the vocabulary to which the document is mapped. In the background technique, this function is called a vocabulary connection (VC). In the VC unit 80, the definition file acquiring unit 84 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 82 instructs the DOM builder 34 to generate a destination tree with reference to the script file acquired by the definition file acquiring unit 84. This manages the correspondence between the source tree and the destination tree. The definition file generator 86 offers a graphical user interface which allows the user to generate a definition file.

The VC unit 80 monitors the connection between the source tree and the destination tree. Upon reception of an editing instruction from the user via a user interface provided by a plug-in that handles a display function, the VC unit 80 first modifies a relevant node of the source tree. As a result, the DOM unit 30 issues a mutation event indicating that the source tree has been modified. Upon reception of the mutation event thus issued, the VC unit 80 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 50, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 20 displays and/or edits documents will be described herein below. When the document processing apparatus 20 loads a document to be processed, the DOM builder 34 generates a DOM tree from the XML document. The main control unit 22 or the editing unit 24 determines which vocabulary describes the XML document by referring to a name space of the XML document to be processed. If the plug-in corresponding to the vocabulary is installed in the document processing apparatus 20, the plug-in is loaded so as to display/edit the document. If, on the other hand, the plug-in is not installed in the document processing apparatus 20, a check shall be made to see whether a mapping definition file exists or not. And if the definition file exits, the definition file acquiring unit 84 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

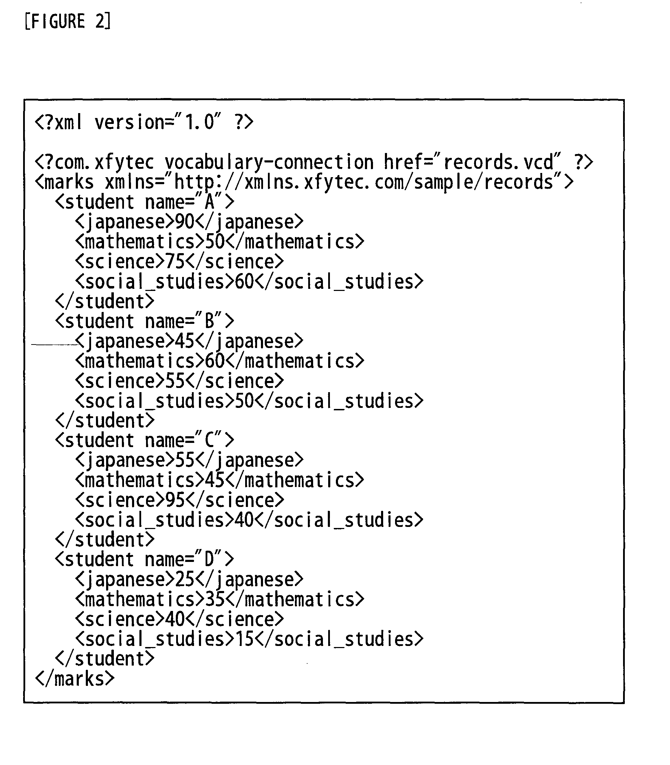

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called "marks managing vocabulary".

Here, the document processing apparatus 20 according to the background technique does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

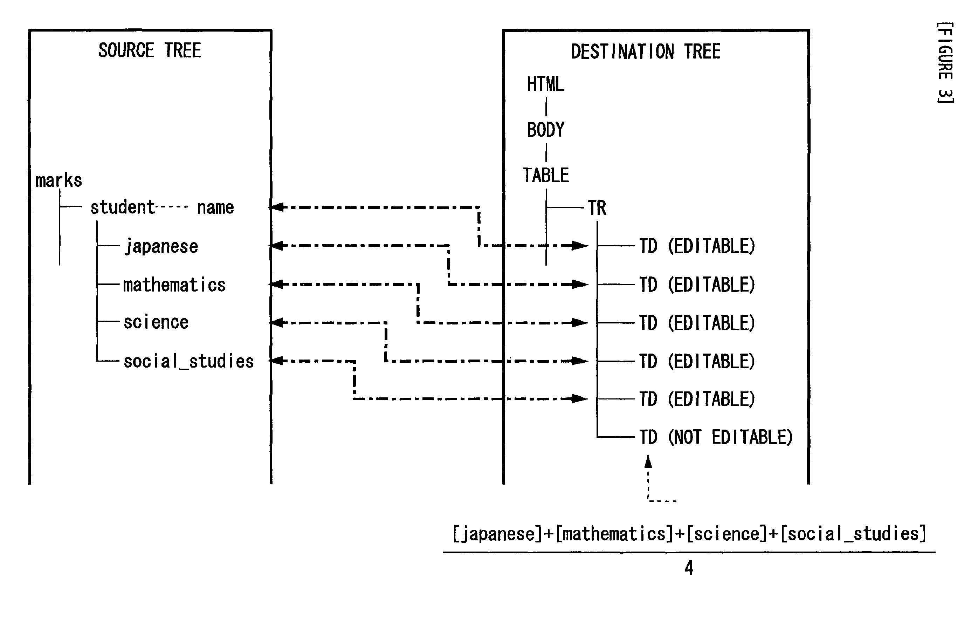

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 50. In the sixth column, an operation expression is designated for calculating a weighted average of the marks for Japanese, mathematics, science and social studies, and average values of the marks for each student are displayed. In this manner, more flexible display can be effected by making it possible to specify the operation expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

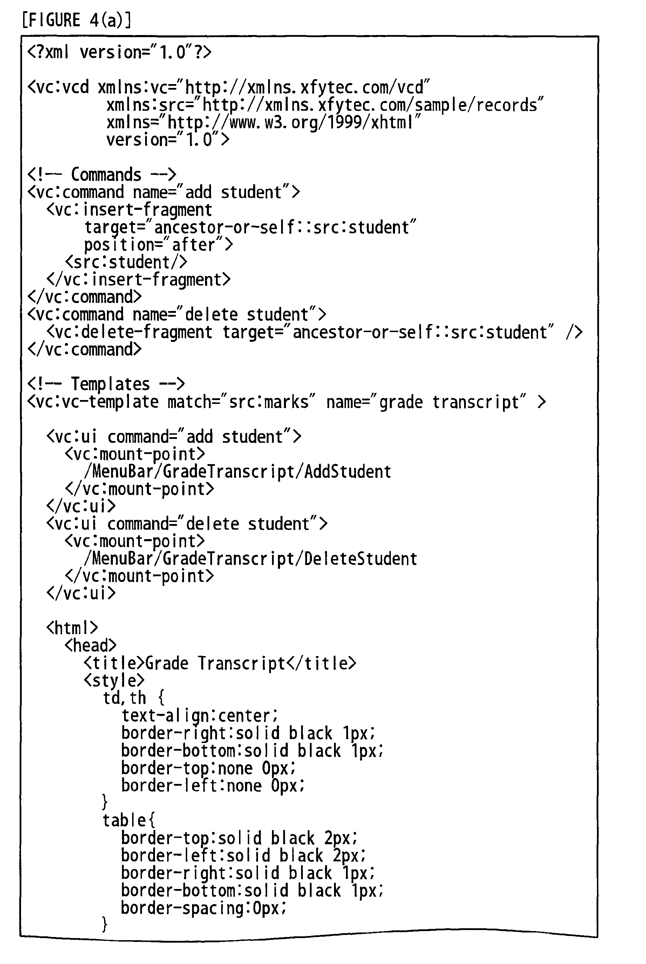

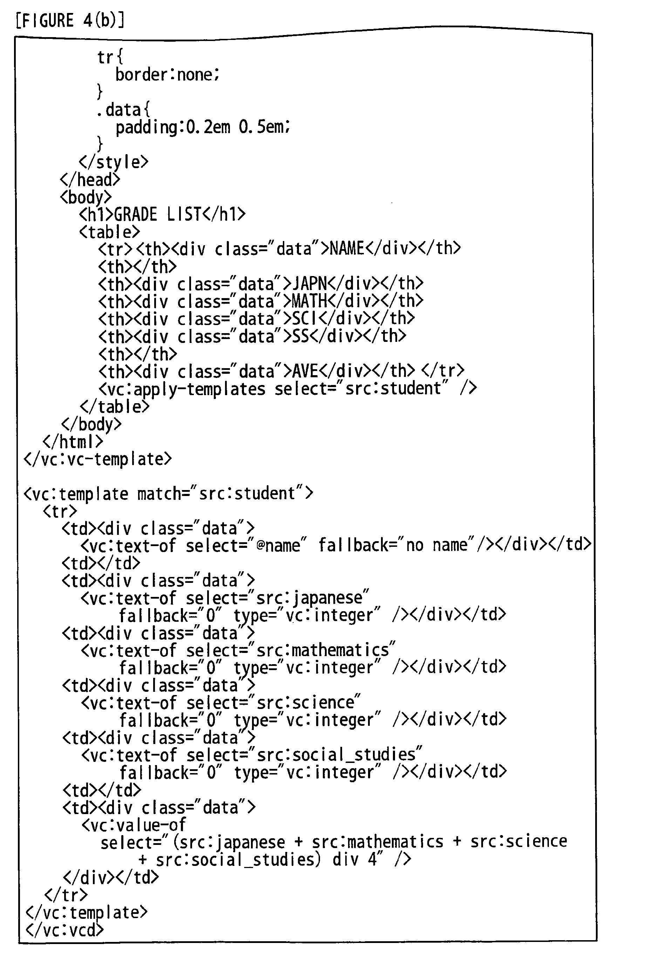

FIG. 4(a) and FIG. 4(b) illustrate an example of a definition file to map the XML document shown in FIG. 2 to the table shown in FIG. 3. This definition file is described in script language defined for use with definition files. In the definition file, definitions of commands and templates for display are described. In the example shown in FIG. 4(a) and FIG. 4(b), "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese", is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, an operation expression "(src:japanese + src:mathematics + scr:science + scr:social studies) div 4" is described in the sixth row. This means that the average of the student's marks is displayed.

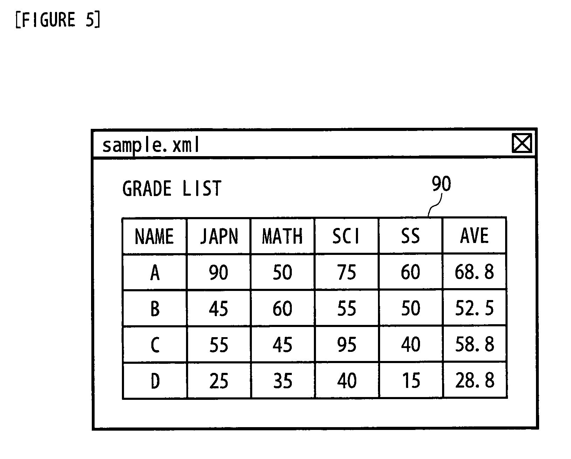

FIG. 5 shows an example of a display screen on which an XML document described in the marks managing vocabulary shown in FIG. 2 is displayed by mapping the XML document to HTML using the correspondence shown in FIG. 3. Displayed from left to right in each row of a table 90 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics are changed to "70". At this time, in order to have the destination tree follow the source tree, the VC unit 80 changes a relevant portion of the destination tree accordingly, so that the HTML unit 50 updates the display based on the destination tree thus changed. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4(a) and FIG. 4(b). When the user selects a command from among these commands, a node "student" is added or deleted in the source tree. In this manner, with the document processing apparatus 20 according to the background technique, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 50.

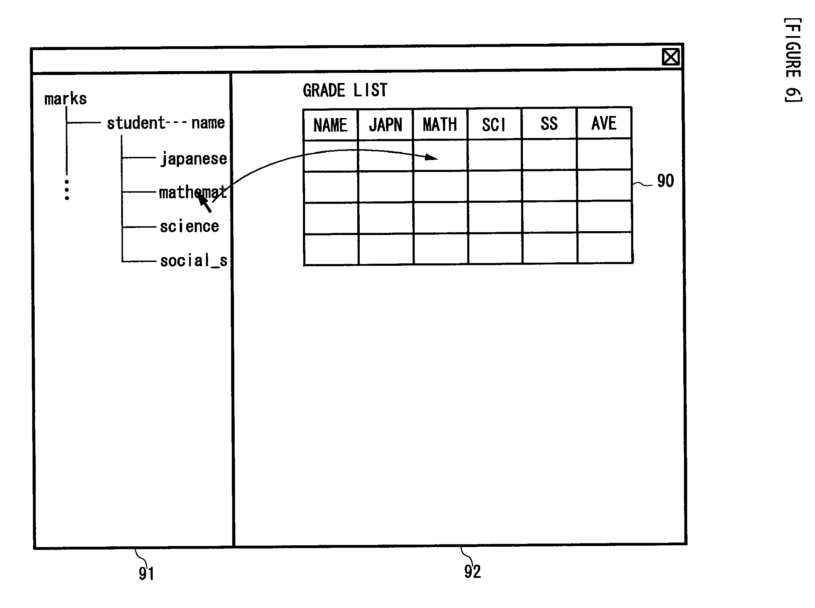

FIG. 6 shows an example of a graphical user interface, which the definition file generator 86 presents to the user, in order for the user to generate a definition file. An XML document to be mapped is displayed in a tree in a left-hand area 91 of a screen. The screen layout of an XML document after mapping is displayed in a right-hand area 92 of the screen. This screen layout can be edited by the HTML unit 50, and the user creates a screen layout for displaying documents in the right-hand area 92 of the screen. For example, a node of the XML document which is to be mapped, which is displayed in the left-hand area 91 of the screen, is dragged and dropped into the HTML screen layout in the right-hand area 92 of the screen using a pointing device such as a mouse, so that a connection between a node at a mapping source and a node at a mapping destination is specified. For example, when "mathematics," which is a child element of the element "student," is dropped to the intersection of the first row and the third column in a table 90 on the HTML screen, a connection is established between the "mathematics" node and a "TD" node in the third column. Either editing or no editing can be specified for each node. Moreover, the operation expression can be embedded in a display screen. When the screen editing is completed, the definition file generator 86 generates definition files, which describe connections between the screen layout and nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited utilizing the VC function without the need to develop a new viewer or editor.

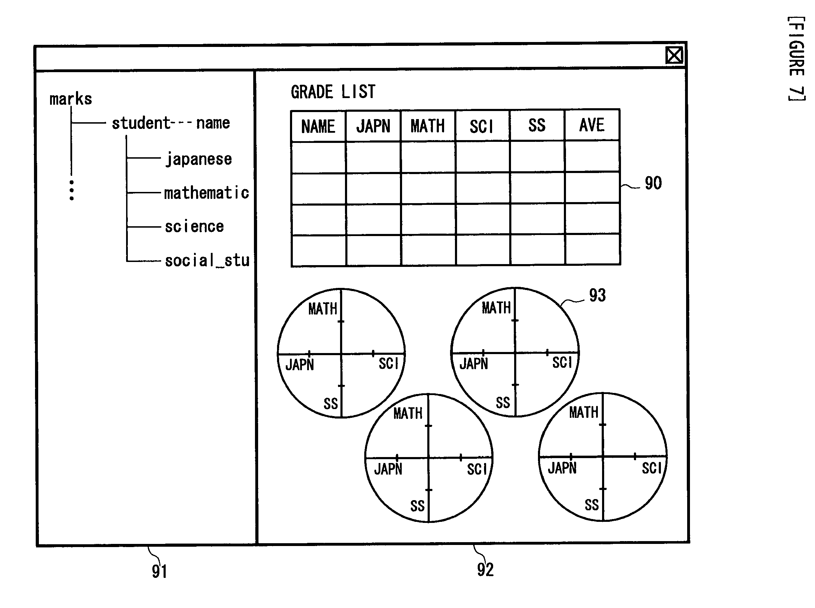

FIG. 7 shows another example of a screen layout generated by the definition file generator 86. In the example shown in FIG. 7, a table 90 and circular graphs 93 are created on a screen for displaying XML documents described in the marks managing vocabulary. The circular graphs 93 are described in SVG. As will be discussed later, the document processing apparatus 20 according to the background technique can process a compound document described in the form of a single XML document according to a plurality of vocabularies. That is why the table 90 described in HTML and the circular graphs 93 described in SVG can be displayed on the same screen.

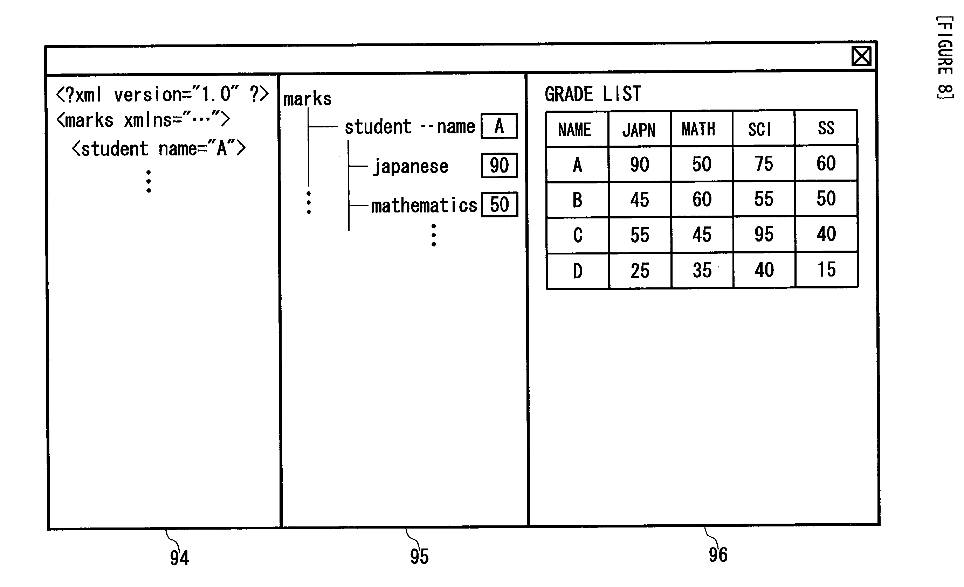

FIG. 8 shows an example of a display medium, which in a preferred but non-limiting embodiment is an edit screen, for XML documents processed by the document processing apparatus 20. In the example shown in FIG. 8, a single screen is partitioned into a plurality of areas and the XML document to be processed is displayed in a plurality of different display formats at the respective areas. The source of the document is displayed in an area 94, the tree structure of the document is displayed in an area 95, and the table shown in FIG. 5 and described in HTML is displayed in an area 96. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 80, all the display units, which are displaying the edit screen, receive the issued mutation event(s) and then update the screens. At this time, if the plug-in is executing the display through the VC function, the VC unit 80 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 50 in charge of displaying the area 96 updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 50 displays the XML document thus mapped. In such an arrangement, three destination trees in the source format, the tree format and the table format are generated. If the editing is carried out in any of the three areas on the screen, the VC unit 80 modifies the source tree and, thereafter, modifies the three destination trees in the source format, the tree format and the table format. Then, the HTML unit 50 updates the three areas of the screen by referring to the three destination trees.

In this manner, a document is displayed on a single screen in a plurality of display formats, thus improving a user's convenience. For example, the user can display and edit a document in a visually easy-to-understand format using the table 90 or the like while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 22 receives from the user a request for switching the display format and then instructs the respective plug-ins to switch the display.

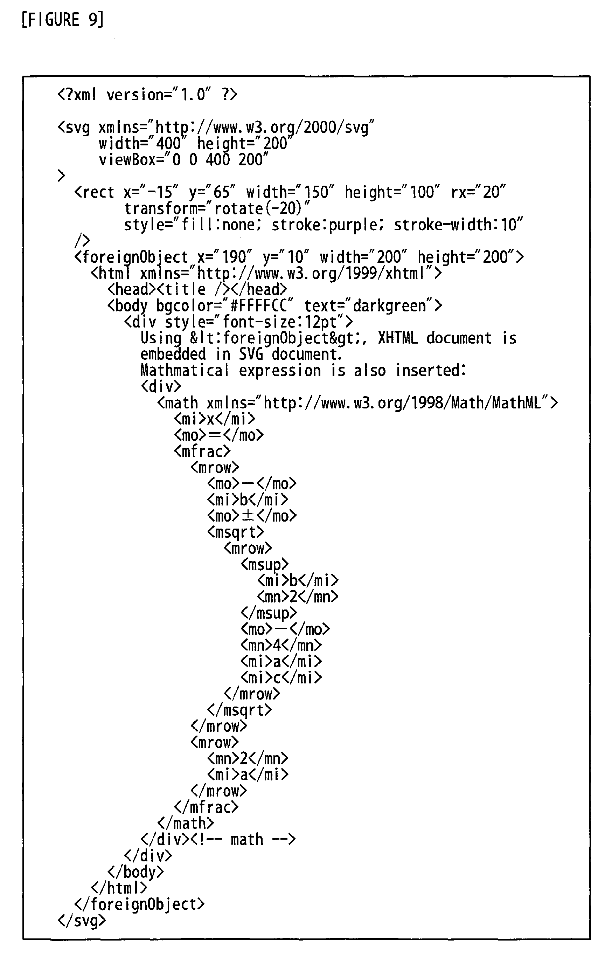

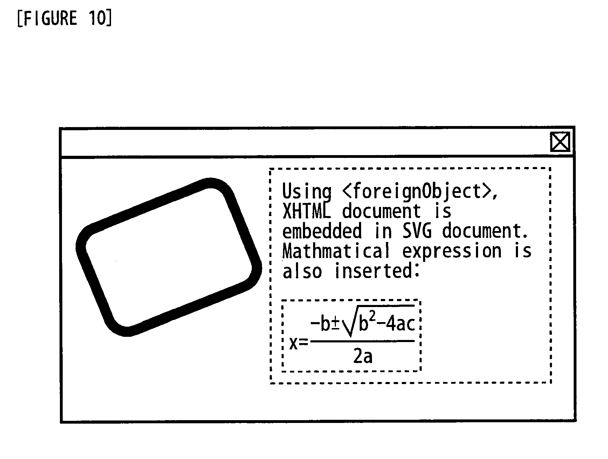

FIG. 9 illustrates another example of an XML document edited by the document processing apparatus 20. In the XML document shown in FIG. 9, an XHTML document is embedded in a "foreignObject" tag of an SVG document, and the XHTML document contains an equation described in MathML. In this case, the editing unit 24 assigns the rendering job to an appropriate display system by referring to the name space. In the example illustrated in FIG. 9, first, the editing unit 24 instructs the SVG unit 60 to render a rectangle, and then instructs the HTML unit 50 to render the XHTML document. Furthermore, the editing unit 24 instructs a MathML unit (not shown) to render an equation. In this manner, the compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 60, or a command set which is defined in the definition file for mapping the SVG document, is displayed. On the other hand, when the cursor lies in an area where the XHTML document is displayed, the menu provided by the HTML unit 50, or a command set which is defined in the definition file for mapping the HTML document, is displayed. Thus, an appropriate user interface can be presented according to the editing position.

In a case that there is neither a plug-in nor a mapping definition file suitable for any one of the vocabularies according to which the compound document has been described, a portion described in this vocabulary may be displayed in source or in tree format. In the conventional practice, when a compound document is to be opened where another document is embedded in a particular document, their contents cannot be displayed without the installation of an application to display the embedded document. According to the background technique, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 80, which is in charge of processing the edited portion, modifies the source tree. A listener for mutation events can be registered for each node in the source tree. Normally, a display unit of the plug-in or the VC unit 80 conforming to a vocabulary that belongs to each node is registered as the listener. When the source tree is modified, the DOM provider 32 traces toward a higher hierarchy from the modified node. If there is a registered listener, the DOM provider 32 issues a mutation event to the listener. For example, referring to the document shown in FIG. 9, if a node which lies lower than the <html> node is modified, the mutation event is notified to the HTML unit 50, which is registered as a listener to the <html> node. At the same time, the mutation event is also notified to the SVG unit 60, which is registered as a listener in an <svg> node, which lies upper to the <html> node. At this time, the HTML unit 50 updates the display by referring to the modified source tree. Since the nodes belonging to the vocabulary of the SVG unit 60 itself are not modified, the SVG unit 60 may disregard the mutation event.

Depending on the contents of the editing, modification of the display by the HTML unit 50 may change the overall layout. In such a case, the layout is updated by a screen layout management mechanism, e.g., the plug-in that handles the display of the highest node, in increments of display regions which are displayed according to the respective plug-ins. For example, in a case of expanding a display region managed by the HTML unit 50, first, the HTML unit 50 renders a part managed by the HTML unit 50 itself, and determines the size of the display region. Then, the size of the display area is notified to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

### (Embodiment)

The embodiment proposes a technique in which, when a document file contains an annotation element or attribute provided for annotating, the name of the element or attribute is displayed. There is a case in viewing or editing a document where a part of the document needs to be highlighted. Highlighting can be generally accomplished by underlining or bolding a word, or changing the color of the word on a word processor or the like. The present embodiment describes a technique for achieving a similar function when editing an XML document.

An annotation tag may be, for example, a tag provided for annotation in a vocabulary, or a tag belonging to a vocabulary provided for annotation. Alternatively, an annotation tag may be a tag specified as such by a user in a definition file or the like. An annotation may be made with an attribute.

The document processing apparatus 20 determines whether or not there exists an annotation tag or attribute in a document file. If there is an annotation tag or attribute, the apparatus will display the name thereof. A tag name may be displayed, for example, beside the text surrounded by annotation tags, in a balloon on the periphery of the text, or in a status display area. Thus, the content specified as an annotation by annotation tags can be effectively highlighted.

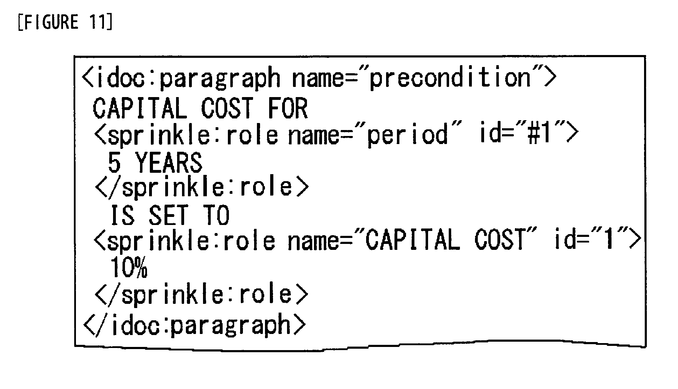

FIG. 11 shows a part of an XML document containing an annotation. In the example of FIG. 11, an element in which "capital cost" is specified for an attribute "name" will be highlighted among elements of "sprinkle: role". Accordingly, the document processing apparatus 20 displays the attribute name "capital cost" in a status display area or on the periphery of the text "10%", which is surrounded by the "sprinkle: role" tags in which the "capital cost" is specified for the attribute.

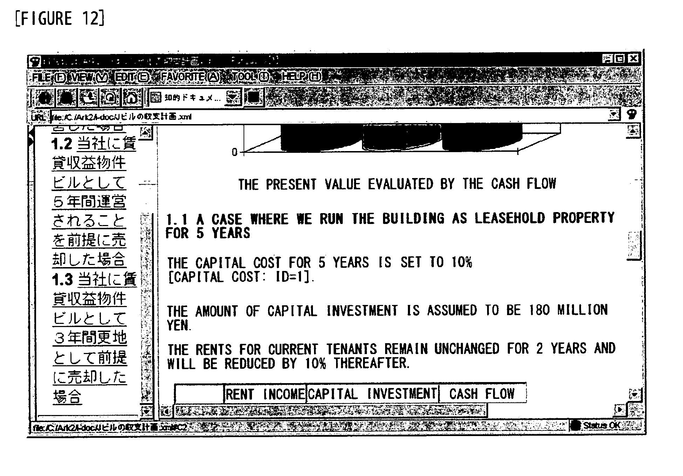

FIG. 12 shows an example of a screen on which the XML document shown in FIG. 11 is displayed. The attribute name "capital cost" for annotation is displayed beside the text "10%" in FIG. 12. In this example, the value of an attribute "id" is also displayed. The name may be continuously displayed, or displayed adjacent to the text when the cursor is on the text. Also, the name may be displayed at any position, such as above or below the text, or on either side of the text.

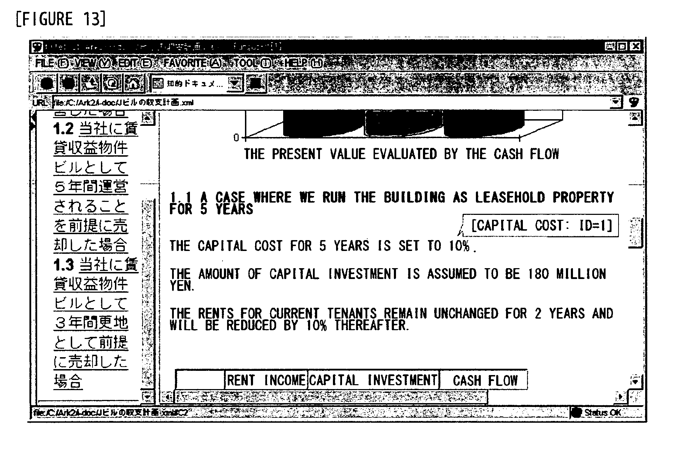

FIG. 13 shows another example of a screen on which the XML document shown in FIG. 11 is displayed. In FIG. 13, the attribute name "capital cost" for annotation is displayed in a balloon adjacent to the text "10%". The name may be continuously displayed in a balloon, or displayed in a balloon adjacent to the text when the cursor is on the text. The balloon may be displayed at any position, such as above or below the text, or on either side of the text.

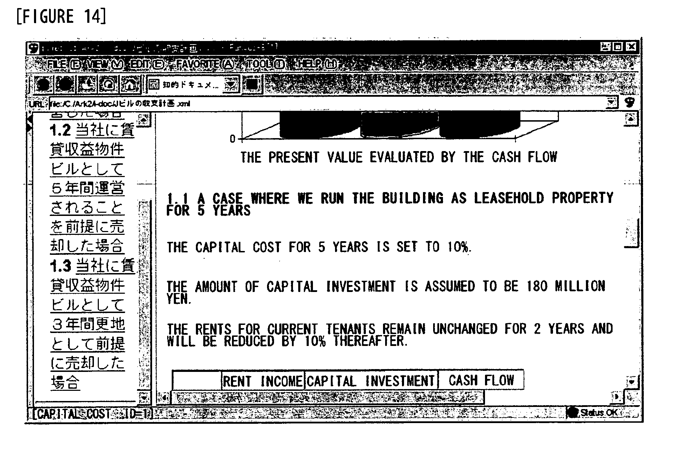

FIG. 14 shows yet another example of a screen on which the XML document shown in FIG. 11 is displayed. In FIG. 14, the attribute name "capital cost" for annotation is displayed in a status display area. The name may be continuously displayed, or displayed when the cursor is on the text. The name may be displayed in any area besides the status display area, such as in a pop-up window.

The operation of the document processing apparatus 20 in displaying the name of an annotation tag will now be described. Although the description below is made regarding tag names, it will be the same for attribute names. As a first example, a case will be given in which a definition file contains a template for processing an annotation element. A template for an annotation element is provided in a definition file, which is related to an XML document containing annotation tags. In the template, the connector "text-of" is related to the text node of the annotation element. Further, another connector is described in the destination tree to create a text node that stores the name of the annotation element. Accordingly, in the destination tree is created a text node storing the text of the annotation element and a text node storing the name of the element. In this case, the name of the element will be continuously displayed adjacent to the text. If the name needs to be displayed only when the cursor is on the text, the logic therefor may be described further in the definition file to achieve it.

A second example will be described in which the VC unit 80 enables the display of a tag name automatically. Upon detection of an annotation element, the VC unit 80 automatically creates a connector for creating a text node that stores the name of the element, even if the definition file contains no template for the element. Accordingly, a text node storing the name of the element is created in the destination tree, so that the name of the element is displayed.

A third example will be described in which another unit having a function to display the name of an annotation element is provided. The unit, annotation display unit, may be provided as a plug-in and added to the document processing apparatus 20. The annotation display unit may, for example, create a transparent layer for displaying the name of an annotation element and display the layer over the screen on which the document is displayed. Upon detection of an annotation element, the annotation display unit provides the name of the element as a text or in a balloon adjacent to the text of the annotation element or on the system line, on a layer for displaying annotations. The annotation display unit may display the name of the element on the layer for displaying annotations only when the cursor is on the text.

Additional description will now be given in association with the embodiment.

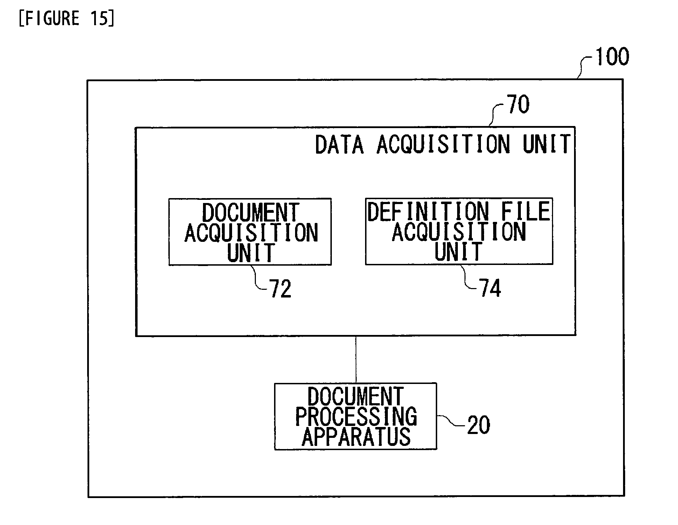

FIG. 15 shows a configuration of a document processing apparatus 100 according to the embodiment. In the document processing apparatus 100 in FIG. 15, a data acquisition unit 70 is particularly depicted as a configuration for acquiring data to be processed. The data acquisition unit 70 comprises a document acquisition unit 72 and a definition file acquisition unit 74. The document acquisition unit 72 acquires an XML document file to be processed. The definition file acquisition unit 74 acquires a definition file that defines the display format of the acquired XML file. The document acquisition unit 72 may acquire an XML document file from an external device, such as a web server, via a network.

In the case of the first example as set forth above, logic will be described in the definition file to display various kinds of information related to a tag, such as the tag name or element value of a certain tag or a certain element included in the XML document file, as an annotation. For example, logic may be described to display the value of the attribute "name" in a balloon among the attributes specified by the <sprinkle> tag as described in association with FIG. 11. In the case of the second or the third example above, the VC unit 80 or the annotation display unit comprises a function to display information related to a certain tag in the XML document file as an annotation. For example, those units may comprise a function to display in the status bar the name and value of the attribute upon detection of the <sprinkle> tag as described in association with FIG. 11. In such case, the <sprinkle> tag in the XML document file has the role of an annotator for specifying data to be displayed as an annotation.

The present invention has been described with reference to the embodiment. The embodiment is intended to be illustrative only and it will be obvious to those skilled in the art that various modifications to constituting elements or processes could be developed and that such modifications are also within the scope of the present invention.

Although the embodiment above describes an example of processing XML documents, the document processing apparatus 100 in the embodiment is also capable of processing documents described in other markup languages, such as SGML and HTML.

### [Industrial Applicability]

The present invention improves users' convenience in processing data structured by a markup language.

## Claims

1. A document processing apparatus, comprising:
acquiring means for acquiring a document described in a markup language;
extracting means for extracting an element or an attribute contained in the document; and
displaying means for displaying the name of the element or attribute thus extracted.

2. The document processing apparatus of claim 1, wherein the extracting means extracts an element or an attribute provided for annotation in the document.

3. The document processing apparatus of claim 1 or 2, wherein the name is displayed in text form adjacent to any one of the value of the element, the value of the attribute, and the value of the element to which the attribute belongs.

4. The document processing apparatus of claim 1 or 2, wherein the name is displayed in a balloon adjacent to any one of the value of the element, the value of the attribute, and the value of the element to which the attribute belongs.

5. The document processing apparatus of claim 1 or 2, wherein the name is displayed in a status display area.

6. A document processing apparatus, comprising:
a document acquisition unit for acquiring a structured document file described in a markup language as a source file;
a definition file acquisition unit for acquiring a definition file which contains a method of displaying data included in a source file; and
a data display unit for displaying data included in a source file on the screen by performing the logic described in the definition file, wherein:
the definition file contains annotation information for specifying related information, which represents characteristics of an element and which is related to a tag, to be displayed as an annotation, from among related information included in a source file; and
the data display unit displays the related information, specified by the annotation information in the definition file, as an annotation to the body of the source file.

7. A document processing apparatus, comprising:
a document acquisition unit for acquiring a structured document file described in a markup language as a source file; and
a data display unit for displaying data included in a source file on the screen in a predetermined display format, wherein:
an annotator is attached to related information to be displayed as an annotation, among related information representing characteristics of an element and related to a tag in the source file; and
the data display unit displays the related information, specified by the annotator, as an annotation to the body of the source file.

8. The document processing apparatus of claim 6 or 7, further comprising an operation detection unit for detecting user operation provided on data displayed on the screen, wherein, when an element defined as an object to be displayed as an annotation is specified by user operation, the data display unit displays related information on the element as an annotation.

9. The document processing apparatus of any one of claims 6 through 8, wherein the data display unit displays the related information of at least any one of the tag name of a target element, the value of the target element, the attribute name of the target element, and the value of the attribute of the target element, as an annotation.

10. A document processing method, comprising:
acquiring a structured document file described in a markup language as a source file;
acquiring a definition file which contains a method of displaying data included in a source file; and
displaying data included in a source file on the screen by performing the logic described in the definition file, wherein:
the definition file contains annotation information for specifying related information, which represents characteristics of an element and which is related to a tag, to be displayed as an annotation, from among related information included in a source file; and
the displaying data on the screen comprises displaying the related information, specified by the annotation information in the definition file, as an annotation to the body of the source file.

11. A document processing method, comprising:
acquiring a structured document file described in a markup language as a source file; and
displaying data included in a source file on the screen in a predetermined display format, wherein:
an annotator is attached to related information to be displayed as an annotation, among related information representing characteristics of an element and related to a tag in the source file; and
the displaying data on the screen comprises displaying the related information, specified by the annotator, as an annotation to the body of the source file.

12. A computer program product for processing a document, comprising:
a module for acquiring a structured document file described in a markup language as a source file;
a module for acquiring a definition file which contains a method of displaying data included in a source file;
a module for displaying data included in a source file on the screen by performing the logic described in the definition file; and
a module for retrieving, from the definition file, annotation information for specifying related information, which represents characteristics of an element and which is related to a tag, to be displayed as an annotation, from among related information contained in a source file, and for displaying the related information in the source file, specified by the annotation information, as an annotation to the body of the source file.

13. A computer program product for processing a document, comprising:
a module for acquiring a structured document file described in a markup language as a source file, in which an annotator is attached to related information to be displayed as an annotation, among related information representing characteristics of an element and related to a tag;
a module for displaying data included in a source file on the screen in a predetermined display format; and
a module for displaying the related information in the source file, specified by the annotator, as an annotation to the body of the source file.
